(19) Europäisches Patentamt
European Patent Office
Office européen des brevets

(11) EP 2 820 053 B1

(12) **EUROPEAN PATENT SPECIFICATION**

(45) Date of publication and mention of the grant of the patent:
**21.12.2016 Bulletin 2016/51**

(21) Application number: **13707591.7**

(22) Date of filing: **22.02.2013**

(51) Int Cl.:
***C08F 10/06*** *(2006.01)* ***C08F 2/00*** *(2006.01)*
***C08F 110/06*** *(2006.01)*

(86) International application number:
**PCT/EP2013/053590**

(87) International publication number:
**WO 2013/127707 (06.09.2013 Gazette 2013/36)**

(54) **PROCESS FOR THE PREPARATION OF POLYPROPYLENE WITH LOW ASH CONTENT**

VERFAHREN ZUR HERSTELLUNG VON POLYPROPYLEN MIT GERINGEM ASCHEGEHALT

PROCÉDÉ POUR LA PRÉPARATION DE POLYPROPYLÈNE AVEC UNE FAIBLE TENEUR EN CENDRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2012 EP 12157103**

(43) Date of publication of application:
**07.01.2015 Bulletin 2015/02**

(73) Proprietor: **Borealis AG**
**1220 Vienna (AT)**

(72) Inventors:
- **NEISSL, Wolfgang**
**A-4040 Lichtenberg (AT)**
- **GLOGER, Dietrich**
**4020 Linz (AT)**
- **SANDHOLZER, Martina**
**A-4030 Linz (AT)**
- **POTTER, Gregory**
**A-4020 Linz (AT)**
- **HORILL, Thomas**
**A-2201 Gerasdorf (AT)**

(74) Representative: **Zumstein, Angela**
**Maiwald Patentanwalts GmbH**
**Elisenhof**
**Elisenstrasse 3**
**80335 München (DE)**

(56) References cited:
**EP-A1- 0 887 379**
**EP-A1- 2 070 956**
**EP-A1- 2 397 517**
**WO-A1-01/04166**
**WO-A1-99/24479**
**WO-A1-2006/037705**
**US-A1- 2010 081 760**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 820 053 B1

## Description

The present invention is directed to a new process with high productivity for the manufacture of polypropylene having low ash content.

Polypropylene is used in many applications and is for instance the material of choice in the field of film capacitors as its chain lacks any kind of polar groups which orient under electrical field stress. As a result, polypropylene intrinsically possesses a low loss factor and high volume resistivity. These properties, combined with a relatively high dielectric constant and self-healing character in the capacitor as well as good mechanical properties, like high melting temperature and high stiffness, make polypropylene so valuable in this technical field. However in case a Ziegler-Natta catalyst has been employed during the manufacture of the polypropylene, typically the dielectric film made from such a polypropylene contains considerable amounts of polar residues, like chlorine, aluminium, titanium, magnesium or silicon originating from the used Ziegler-Natta catalyst. These residues decrease the resistivity, i.e. increase the conductivity of the polymers, making the polymer unsuitable to be used as such in applications, where very low conductivity is needed, like in films for capacitors. Accordingly to make polypropylene commercially attractive in this technical field it must be troublesome purified, typically washed in order to remove the undesired residues from the polymer material, a process which is time consuming and cost-intensive. Typically the purification of the polymer is carried out in an additional step after the last polymerisation step. Accordingly the polymer from the last polymerization step is conducted into a washing step, where the catalyst residues are dissolved out of the polymer material. Washing liquid typically used comprises organic hydrocarbon solvents having polar groups, like hydroxyl groups, e.g. propanol.

The high amount of residues is caused by several factors, wherein productivity plays a central role. In case the productivity of the used catalyst is high during the polymerization process, lower amounts of catalyst can be employed and thus the amount of undesired residues can be reduced.

Accordingly the object of the present invention is to provide a process which enables a skilled person to produce a polypropylene with high productivity by keeping the residue content in the polypropylene low without the need to apply a troublesome washing step. The finding of the present invention is to use a Ziegler Natta catalyst with a very balanced mol-ratio of co-catalyst (Co) to external donor (ED) [Co/ED] and of co-catalyst (Co) to transition metal (TM) [Co/TM], respectively.

Accordingly the present invention is directed to a process for the preparation of a polypropylene (PP) in a sequential polymerization process comprising at least three reactors connected in series, wherein
the polymerization takes place in the presence of a Ziegler-Natta catalyst (ZN-C), said Ziegler-Natta catalyst (ZN-C) comprises

(a) a pro-catalyst (PC) comprising

(a1) a compound of a transition metal (TM),
(a2) a compound of a metal (M) which metal is selected from one of the groups 1 to 3 of the periodic table (IUPAC),
(a3) an internal electron donor (ID),

(b) a co-catalyst (Co), and
(c) an external donor (ED),

wherein further

(d) the mol-ratio of co-catalyst (Co) to external donor (ED) [Co/ED] is in the range of above 10 to below 25, like 12 to below 25, and
(e) the mol-ratio of co-catalyst (Co) to transition metal (TM) [Co/TM] is in the range of above 100 to b 195.

Preferably the temperature in the instant process is at least in one of the three reactors, preferably in all three reactors, in the range of 70 °C to 100 °C.

It has been surprisingly found out that a polypropylene (PP) produced according to the inventive process has a low residue content. Further the productivity of the applied catalyst is very high.

In the following the invention will be described in more detail.

<u>Polymerization process:</u>

One requirement of the present invention is that the polypropylene (PP) is produced in a sequential polymerization process comprising at least three reactors.

The term "sequential polymerization process" indicates that the polypropylene is produced in at least three

reactors connected in series. Accordingly the present process comprises at least a first polymerization reactor (R1), a second polymerization reactor (R2), and a third polymerization reactor (R3). The term "polymerization reactor" shall indicate that the main polymerization takes place. Thus in case the process consists of three polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR). Accordingly the average concentration of polypropylene (PP), i.e. the first fraction ($1^{st}$ F) of the polypropylene (PP), in the polymer slurry within the loop reactor (LR) is typically from 15 wt.-% to 55 wt.-%, based on the total weight of the polymer slurry within the loop reactor (LR). In one preferred embodiment of the present invention the average concentration of polypropylene (PP) i.e. of the first fraction ($1^{st}$ F) of the polypropylene (PP) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the polypropylene (PP), i.e. the first fraction ($1^{st}$ F) of the polypropylene (PP), of the first reactor (R1), more preferably polymer slurry of the loop reactor (LR) containing the first fraction ($1^{st}$ F) of the polypropylene (PP), is directly fed into the second reactor (R2), i.e. into the first gas phase reactor (GPR-1), without a flash step between the stages. This kind of direct feed is described in EP 887379 A, EP 887380 A, EP 887381 A and EP 991684 A. By "direct feed" is meant a process wherein the content of the first reactor (R1), i.e. of the loop reactor (LR), the polymer slurry comprising the first fraction ($1^{st}$ F) of the polypropylene (PP), is led directly to the next stage gas phase reactor.

Alternatively, the polypropylene (PP), i.e. the first fraction ($1^{st}$ F) of the polypropylene (PP), of the first reactor (R1), more preferably polymer slurry of the loop reactor (LR) containing the first fraction ($1^{st}$ F) of the polypropylene (PP), may be also directed into a flash step or through a further concentration step before fed into the second reactor (R2), i.e. into the first gas phase reactor (GPR-1). Accordingly, this "indirect feed" refers to a process wherein the content of the first reactor (R1), of the loop reactor (LR), i.e. the polymer slurry, is fed into the second reactor (R2), into the first gas phase reactor (GPR-1), via a reaction medium separation unit and the reaction medium as a gas from the separation unit.

A gas phase reactor (GPR) according to this invention is preferably a fluidized bed reactor, a fast fluidized bed reactor or a settled bed reactor or any combination thereof.

More specifically, the second reactor (R2), the third reactor (R3) and any subsequent reactor are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), the third reactor (R3) and any optional subsequent reactor are gas phase reactors (GPR). Accordingly for the instant process at least three, preferably three polymerization reactors, namely a slurry reactor (SR), like loop reactor (LR), a first gas phase reactor (GPR-1), and a second gas phase reactor (GPR-2) connected in series are used. If needed prior to the slurry reactor (SR) a pre-polymerization reactor is placed.

The Ziegler-Natta catalyst (ZN-C) is fed into the first reactor (R1) and is transferred with the polymer (slurry) obtained in the first reactor (R1) into the subsequent reactors. If the process covers also a pre-polymerization step it is preferred that the Ziegler-Natta catalyst (ZN-C) is fed in the pre-polymerization reactor. Subsequently the pre-polymerization product containing the Ziegler-Natta catalyst (ZN-C) is transferred into the first reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen. Accordingly it is preferred that the temperature in at least one of the three reactors, preferably at least in the first reactor (R1), i.e. in the loop reactor (LR), is in the range of 70 to 100 °C, preferably in the range of 70 to 90 °C, more preferably in the range of 80 to 90 °C, like in the range of 82 to 90 °C, i.e. 85 °C. In one preferred embodiment in all three reactors the temperature is in the range of 70 to 100 °C, preferably in the range of 70 to 90 °C, more preferably in the range of 80 to 90 °C, like in the range of 82 to 90 °C, i.e. 85 °C. In one specific embodiment the temperature in all three reactor is essentially the same, i.e. differ not more than 2 °C from each other and further the temperature in all three reactors is in the range of 70 to 100°C, preferably in the range of 70 to 90°C, more preferably in the range of 80 to 90 °C, like in the range of 82 to 90°C, i.e. 85°C.

Typically the pressure in the first reactor (R1), preferably in the loop reactor (LR), is in the range of from 20 to 80 bar, preferably 30 to 60 bar, whereas the pressure in the second reactor (R2), i.e. in the first gas phase reactor (GPR-1), and in the third reactor (R3), in the second gas phase reactor (GPR-2), and in any subsequent reactor is in the range of from 5 to 50 bar, preferably 15 to 35 bar.

Hydrogen is added in each reactor in order to control the molecular weight, i.e. the melt flow rate $MFR_2$.

Preferably the weight-ratio of co-catalyst (Co) to propylene (C3) [Co/C3], especially when considering the propylene feed into the pre polymerization and loop reactors is in the range of 25 g/t to 40 g/t, more preferably in the range of 28 g/t to 38 g/t, yet more preferably in the range of 29 g/t to 35 g/t.

Preferably the weight-ratio of external donor (ED) to propylene (C3) [ED/C3], especially when considering the total propylene feed into the pre polymerization and loop reactors is in the range of 2.8 g/t to 4.8 g/t, more preferably in the range of 3.0 g/t to 4.6 g/t, yet more preferably in the range of 3.3 g/t to 4.3 g/t.

The residence time can vary in the reactors identified above. In embodiments, the residence time in the first reactor (R1), for example in the loop reactor (LR), is in the range of from 0.5 to 5 hours, for example 0.5 to 2 hours, while the residence time in the subsequent reactors i.e. in the gas phase reactors, generally will be from 1 to 8 hours.

Accordingly the process according the instant invention comprises the following steps under the conditions set out above

(a) in the first polymerization reactor (R1), i.e. in a loop reactor (LR), propylene and optionally at least one other $\alpha$-olefin, like optionally a $C_2$ to $C_{10}$ $\alpha$-olefin other than propylene, is/are polymerized obtaining a first fraction ($1^{st}$ F) of the polypropylene (PP),

(b) transferring said first fraction ($1^{st}$ F) to second polymerization reactor (R2),

(c) in the second polymerization reactor (R2) propylene and optionally at least one other $\alpha$-olefin, like optionally a $C_2$ to $C_{10}$ $\alpha$-olefin other than propylene, is/are polymerized in the presence of the first fraction ($1^{st}$ F) obtaining a second fraction ($2^{nd}$ F) of the polypropylene (PP), said first fraction ($1^{st}$ F) and said second fraction ($2^{nd}$ F) form a first mixture ($1^{st}$ M),

(d) transferring said first mixture ($1^{st}$ M) to third polymerization reactor (R3), and

(e) in the third polymerization reactor (R3) propylene and optionally at least one other $\alpha$-olefin, like optionally a $C_2$ to $C_{10}$ $\alpha$-olefin other than propylene, is/are polymerized in the presence of the first mixture ($1^{st}$ M) obtaining a third fraction ($3^{rd}$ F) of the polypropylene (PP), said first mixture ($1^{st}$ M) and said third fraction ($3^{rd}$ F) form the polypropylene (PP).

After step (e) the polypropylene is preferably discharged without any washing step. Accordingly in one preferred embodiment the polypropylene (PP) is not subjected to a washing step. In other words in a specific embodiment the polypropylene is not subjected to a washing step und thus is used unwashed in application forming process.

<u>Ziegler-Natta Catalyst (ZN-C)</u>

As pointed out above in the specific process for the preparation of the polypropylene (PP) as defined above a Ziegler-Natta catalyst (ZN-C) must be used. Accordingly the Ziegler-Natta catalyst (ZN-C) will be now described in more detail.

Accordingly the Ziegler-Natta catalyst (ZN-C) must comprise

(a) a pro-catalyst (PC) comprising

  (a1) a compound of a transition metal (TM),
  (a2) a compound of a metal (M) which metal is selected from one of the groups 1 to 3 of the periodic table (IUPAC), and
  (a3) an internal electron donor (ID),

(b) a co-catalyst (Co), and
(c) an external donor (ED).

The metal of the compound of a transition metal (TM) is preferably selected from one of the groups 4 to 6, in particular of group 4, like titanium (Ti), of the periodic table (IUPAC). Accordingly the compound of the transition metal (TM) is preferably selected from the group consisting of titanium compound having an oxidation degree of 3 or 4, vanadium compound, chromium compound, zirconium compound, hafnium compound and rare earth metal compounds, more preferably selected from the group consisting of titanium compound, zirconium compound and hafnium compound, and most preferably the transition metal is a titanium compound. Moreover the compounds of the transition metal (TM) are in particular transition metal halides, such as transition metal chlorides. The titanium trichloride and titanium tetrachloride are particularly preferred. Especially preferred is titanium tetrachloride.

According to this invention the term "compound of transition metal" and the term "transition metal compound" are synonyms.

The compound of metal (M) is a compound which metal is selected from one of the groups 1 to 3 of the periodic table (IUPAC), preferably from the Group 2 metal. Usually the compound of metal (M) is titaniumless. Especially the compound of metal (M) is a magnesium compound, like $MgCl_2$.

Moreover as stated above the pro-catalyst (PC) must comprise an internal electron donor (ID), which is chemically different to the external donor (ED) of the Ziegler-Natta catalyst (ZN-C), i.e. the internal donor (ID) preferably comprises, still more preferably is, a dialkylphthalate of formula (II)

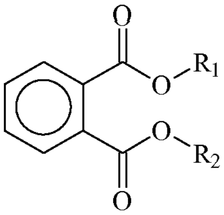

(II)

wherein $R_1$ and $R_2$ can be independently selected from a $C_1$ to $C_4$ alkyl, preferably $R_1$ and $R_2$ are the same, i.e. define the same $C_1$ to $C_4$ alkyl residue.

Preferably the internal donor (ID) comprises, like is, a n-dialkylphthalate of formula (II), wherein $R_1$ and $R_2$ can be independently selected from a $C_1$ to $C_4$ n-alkyl, preferably $R_1$ and $R_2$ are the same, i.e. define the same $C_1$ to $C_4$ n-alkyl residue. Still more preferably the internal donor (ID) comprises, like is, n-dialkylphthalate of formula (II), wherein $R_1$ and $R_2$ can be independently selected from a $C_1$ and $C_2$ alkyl, preferably $R_1$ and $R_2$ are the same, i.e. define the same $C_1$ or $C_2$ alkyl residue. Still more preferably the internal donor (ID) comprises, like is, diethylphthalate.

Of course the above defined and further below defined pro-catalyst (PC) is a solid, supported pro-catalyst composition.

Moreover it is preferred that the pro-catalyst (PC) contains not more than 2.5 wt.-% of the transition metal (TM), preferably titanium. Still more preferably the pro-catalyst contains 1.7 to 2.5 wt.-% of the transition metal (TM), preferably titanium. Additionally it is appreciated that the molar ratio of internal donor (ID) to metal (M), like Mg, of the pro-catalyst [ID/M] is between 0.03 and 0.08, still more preferably between 0.04 and 0.06, and/or its internal donor (ID) content is between 4 and 15 wt.-%, still more preferably between 6 and 12 wt.-%. Furthermore it is preferred that the internal donor (ID) is the result of a transesterification of a dialkylphthalate of formula (I) with an alcohol. It is in particular preferred that the pro-catalyst (PC) is a pro-catalyst (PC) as produced in the patent applications WO 87/07620, WO 92/19653, WO 92/19658 and EP 0 491 566.

The metal of the compound of a transition metal (TM) is preferably selected from one of the groups 4 to 6, in particular of group 4, like titanium (Ti), of the periodic table (IUPAC). Accordingly it is preferred that the pro-catalyst (PC) is prepared by bringing together

(a) a compound of a transition metal (TM), preferably a transition metal (TM) compound selected from one of the groups 4 to 6, more preferably a transition metal (TM) compound of group 4, like titanium (Ti) compound, of the periodic table (IUPAC), in particular a titanium halide, like $TiCl_3$ or $TiCl_4$, the latter especially preferred,

(b) a compound of a metal (M) which metal is selected from one of the groups 1 to 3 of the periodic table (IUPAC), preferably a compound of magnesium, like $MgCl_2$,

(c) a $C_1$ to $C_4$ alcohol, preferably a $C_1$ to $C_2$ alcohol, like methanol or ethanol, most preferably ethanol and

(d) a dialkylphthalate of formula (I),

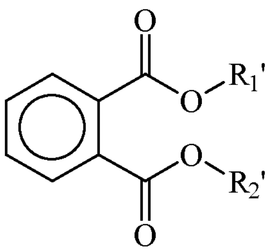

(I)

wherein $R_1$' and $R_2$' have more carbon atoms as said alcohol, preferably are independently at least a $C_5$ alkyl, like at least a $C_8$ alkyl, more preferably $R_1$' and $R_2$' are the same and are at least a $C_5$ alkyl, like at least a $C_8$ alkyl, or preferably a n-dialkylphthalate of formula (I) wherein $R_1$' and $R_2$' have more carbon atoms as said alcohol, preferably

are independently at least a $C_5$ n-alkyl, like at least a $C_8$ n-alkyl, more preferably $R_1$' and $R_2$' are the same and are at least a $C_5$ n-alkyl, like at least a $C_8$ n-alkyl

or

more preferably dioctylphthalate, like di-iso-octylphthalate or diethylhexylphthalate, yet more preferably diethylhexylphthalate,

wherein

a transeterification between said alcohol and said dialkylphthalate of formula (I) has been carried out under suitable transesterification conditions, i.e. at a temperature between 130 to 150 °C.

Among others the preferred dialkylphthalate of formula (I) for the above and further down described process for the manufacture of the pro-catalyst (PC) is selected from the group consisting of propylhexyphthalate (PrHP), dioctylphthalate (DOP), di-iso-decylphthalate (DIDP), diundecylphthalate, diethylhexylphthalate and ditridecylphthalate (DTDP). The most preferred dialkylphthalate is dioctylphthalate (DOP), like di-iso-octylphthalate or diethylhexylphthalate, in particular diethylhexylphthalate.

Preferably at least 80 wt.-%, more preferably at least 90 wt.-%, of the dialkylphthalate of formula (I) is transesterified to the dialkylphthalate of formula (II) as defined above.

It is particular preferred that the pro-catalyst (PC) is prepared by

(a) contacting a spray crystallized or solidified adduct of the formula $MgCl_2$*nEtOH, wherein n is 1 to 6, with $TiCl_4$ to form a titanised carrier,

(b) adding to said titanised carrier

(i) a dialkylphthalate of formula (I) with $R_1$' and $R_2$' being independently at least a $C_5$ alkyl, like at least a $C_8$ alkyl, or preferably

(ii) a dialkylphthalate of formula (I) with $R_1$' and $R_2$' being the same and being at least a $C_5$ alkyl, like at least a $C_8$ alkyl

or more preferably

(iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is dioctylphthalate (DOP), like di-iso-octylphthalate or diethylhexylphthalate, in particular diethylhexylphthalate, to form a first product

(c) subjecting said first product to suitable transesterification conditions, i.e. at a temperature between 130 to 150 °C such that said ethanol is transesterified with said ester groups of said dialkylphthalate of formula (I) to form preferably at least 80 mol-%, more preferably 90 mol-%, most preferably 95 mol.-%, of a dialkylphthalate of formula (II) with $R_1$ and $R_2$ being $-CH_2CH_3$, and

(d) recovering said transesterification product as the pro-catalyst (PC).

As a further requirement the Ziegler-Natta catalyst (ZN-C) must comprise a co-catalyst (Co). Preferably the co-catalyst (Co) is a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEA), dialkyl aluminium chloride or alkyl aluminium sesquichloride. In one specific embodiment the co-catalyst (Co) is triethylaluminium (TEA).

Additionally the Ziegler-Natta catalyst (ZN-C) must comprise an external donor (ED). Preferably the external donor (ED) is a hydrocarbyloxy silane derivative. Accordingly in one specific embodiment the external donor (ED) is represented by formula (IIIa) or (IIIb).

Formula (IIIa) is defined by

$$Si(OCH_3)_2R_2^5 \qquad \text{(IIIa)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \qquad \text{(IIIb)}$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor (ED) is selected from the group consisting of diethylaminotriethoxysilane $[Si(OCH_2CH_3)_3(N(CH_2CH_3)_2)]$ (U-donor), dicyclopentyl dimethoxy silane $[Si(OCH_3)_2(cyclo\text{-}pentyl)_2]$ (D-donor), diisopropyl dimethoxy silane $[Si(OCH_3)_2(CH(CH_3)_2)_2]$ (P-donor) and mixtures thereof. Most preferably the external donor is dicyclopentyl dimethoxy silane $[Si(OCH_3)_2(cyclo\text{-}pentyl)_2]$ (D-donor).

Accordingly, especially good results are achieved with a Ziegler-Natta catalyst (ZN-C) comprising

(a) a pro-catalyst (PC) comprising titanium, $MgCl_2$, and internal donor (ID), wherein said internal donor (ID) comprises, preferably is,

(i) a dialkylphthalate of formula (II),

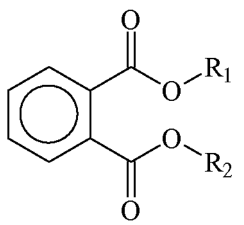

(II)

wherein $R_1$ and $R_2$ are independently selected from a $C_1$ to $C_4$ alkyl, preferably $R_1$ and $R_2$ are the same, i.e. define the same $C_1$ to $C_4$ alkyl residue, or preferably

(ii) a n-dialkylphthalate of formula (II), wherein $R_1$ and $R_2$ can be independently selected from a $C_1$ to $C_4$ n-alkyl, preferably $R_1$ and $R_2$ are the same, i.e. define the same $C_1$ to $C_4$ n-alkyl residue,

or more preferably

(iii) a n-dialkylphthalate of formula (II), wherein $R_1$ and $R_2$ can be independently selected from a $C_1$ and $C_2$ alkyl, preferably $R_1$ and $R_2$ are the same, i.e. have the same $C_1$ or $C_2$ alkyl residue,

or still more preferably

(iv) diethylphthalate,

(b) a cocatalyst (Co) being trialkylaluminium, dialkyl aluminium chloride or alkyl aluminium sesquichloride, preferably triethylaluminium (TEA), and

(c) an external donor (ED) being selected from the group consisting of diethylaminotriethoxysilane $[Si(OCH_2CH_3)_3(N(CH_2CH_3)_2)]$, dicyclopentyl dimethoxy silane $[Si(OCH_3)_2(cyclo\text{-}pentyl)_2]$ (D-donor), diisopropyl dimethoxy silane $[Si(OCH_3)_2(CH(CH_3)_2)_2]$ (P-donor) and mixtures thereof, more preferably being dicyclopentyl dimethoxy silane $[Si(OCH_3)_2(cyclo\text{-}pentyl)_2]$.

If desired the Ziegler-Natta catalyst (ZN-C) is modified by polymerizing a vinyl compound in the presence of said catalyst, wherein the vinyl compound has the formula:

$$CH_2=CH\text{-}CHR^3R^4$$

wherein $R^3$ and $R^4$ together form a 5- or 6-membered saturated, unsaturated or aromatic ring or independently represent an alkyl group comprising 1 to 4 carbon atoms.

More preferably said pro-catalyst (PC) has been produced as defined above and also described in the patent applications WO 92/19658, WO 92/19653 and EP 0 491 566 A2. The co-catalyst (Co) as well as the external donor (ED) are added to the pro-catalyst (PC) prior to polymerization of the polypropylene (PP) or are fed all together to the first reactor (R1) or - if used - to the pre-polymerization reactor.

Important aspect of the present invention is that the ratio between on the one hand of co-catalyst (Co) and the external donor (ED) [Co/ED] and on the other hand of the co-catalyst (Co) and the transition metal (TM) [Co/TM] have been carefully chosen.

Accordingly

(a) the mol-ratio of co-catalyst (Co) to external donor (ED) [Co/ED] must be in the range of above 10 to below 25, preferably is in the range of 12 to below 25, more preferably is in the range of 12 to 23, yet more preferably is in the range of 15 to 22, and
(b) the mol-ratio of co-catalyst (Co) to transition metal (TM) [Co/TM] must be in the range of above 100 to below 200, preferably is in the range of 110 to 195, more preferably is in the range of 120 to 190, still more preferably is in the range of 125 to 185, yet more preferably is in the range of 128 to 182.

The polypropylene (PP)

With the above described process including the specific defined Ziegler-Natta catalyst (ZN-C) a polypropylene (PP) with high productivity can be produced. Accordingly, the polypropylene (PP) is in particular featured by low ash content, in particular by low ash content without any purification, i.e. washing step. Accordingly the polypropylene (PP) has an ash content of below 45 ppm, i.e. in the range of 10 to below 45 ppm, preferably of below 40 ppm, i.e. 15 to below 40 ppm, more preferably in the range of 30 to 40 ppm.

With the instant process any polypropylene (PP) can be produced, i.e. a propylene homopolymer (H-PP) or a propylene copolymer. The term "propylene copolymer" shall also include complex structures, like heterophasic systems, i.e. a composition comprising a polypropylene matrix in which an elastomeric propylene copolymer is dispersed. However it is preferred that the propylene copolymer according to this invention is featured by rather low cold xylene soluble (XCS) content, i.e. by a xylene cold soluble (XCS) of below 10 wt.-%, and thus is not be regarded as a heterophasic system. A propylene copolymer with such low xylene cold soluble (XCS) content is indicated in the instant invention as a random propylene copolymer (R-PP).

Accordingly the polypropylene (PP) is preferably a crystalline. The term "crystalline" indicates that the polypropylene (PP), i.e. the propylene homopolymer (H-PP) or the propylene copolymer (R-PP), has a rather high melting temperature. Accordingly throughout the invention the propylene homopolymer (H-PP) or the propylene copolymer (R-PP) is regarded as crystalline unless otherwise indicated. Therefore the polypropylene (PP) has preferably a melting temperature more than 120 °C, more preferably more than 125 °C, still more preferably more than 130 °C, like in the range of more than 130 to 168 °C, yet more preferably of more than 160 °C, like of more than 160 to 168, still yet of more preferably more than 163 °C, like of more than 163 to 168 °C. If the polypropylene (PP) is a propylene homopolymer (H-PP) the melting temperature is especially preferred of more than 160 °C, i.e. of more than 160 to 168, like of more than 163 °C, i.e. of more than 163 to 168 °C. On the other hand in case the polypropylene is a random propylene copolymer (R-PP) the melting temperature is preferably more than 125 °C, like in the range of more than 125 to 155 °C, more preferably of more than 130 °C, like in the range of more than 130 to 155 °C.

Additionally or alternatively it is appreciated that the polypropylene (PP), i.e. the propylene homopolymer (H-PP) or the random propylene copolymer (R-PP), has a rather high crystallization temperature. Thus it is preferred that the polypropylene (PP), i.e. the propylene homopolymer (H-PP) or the random propylene copolymer (R-PP), has a crystallization temperature of at least 110 °C, more preferably of at least 115 °C, still more preferably of at least 118 °C. Accordingly the polypropylene (PP), i.e. the propylene homopolymer (H-PP) or the random propylene copolymer (R-PP), has a crystallization temperature in the range of 110 to 128 °C, more preferably in the range of 115 to 128 °C, yet more preferably in the range of 118 to 128 °C. If the polypropylene (PP) is a propylene homopolymer (H-PP) the crystallization temperature is especially preferred of more than 110 °C, i.e. of more than 110 to 128, more preferably of than 115 °C, like of more than 115 to 128 °C, yet more preferably of than 118 °C, like of more than 118 to 128 °C. On the other hand in case the polypropylene is a random propylene copolymer (R-PP) the crystallization temperature is preferably more than 110 °C, like in the range of more than 110 to 120 °C, more preferably of more than 115 °C, like in the range of more than 115 to 120 °C.

Preferably the polypropylene (PP), like the propylene homopolymer (H-PP) or the random propylene copolymer (R-PP), is isotactic. Accordingly it is appreciated that the polypropylene (PP), like the propylene homopolymer (H-PP) or the random propylene copolymer (R-PP), has a rather high pentad concentration (mmmm%) i.e. more than 92.0 %, more preferably more than 93.5 %, like more than 93.5 to 97.0 %, still more preferably at least 94.0 %, like in the range of 94.0 to 97.0 %.

A further characteristic of the polypropylene (PP), like of the propylene homopolymer (H-PP) or of the random propylene copolymer (R-PP), is the low amount of misinsertions of propylene within the polymer chain, which indicates that the polypropylene (PP), like the propylene homopolymer (H-PP) or the random propylene copolymer (R-PP), is produced in the presence of a catalyst as defined above, i.e. in the presence of a Ziegler-Natta catalyst (ZN-C). Accordingly the polypropylene (PP), like the propylene homopolymer (H-PP) or the random propylene copolymer (R-PP), is preferably featured by low amount of 2,1 erythro regio-defects, i.e. of equal or below 0.4 mol.-%, more preferably of equal or below than 0.2 mol.-%, like of not more than 0.1 mol.-%, determined by $^{13}C$-NMR spectroscopy. In an especially preferred

embodiment no 2,1 erythro regio-defects are detectable, i.e. the amount of 2,1 erythro regio-defects is 0.0 mol.-%.

Due to the low amounts of regio-defects the polypropylene (PP), like the propylene homopolymer (H-PP) or the random propylene copolymer (R-PP), is additionally characterized by a high content of thick lamella. The specific combination of rather high mmmm pentad concentration and low amount of regio-defects has also impact on the crystallization behaviour of the polypropylene (PP), like the propylene homopolymer (H-PP) or the random propylene copolymer (R-PP). Thus, the polypropylene (PP), like the propylene homopolymer (H-PP) or the random propylene copolymer (R-PP), of the instant invention is featured by long crystallisable sequences and thus by a rather high amount of thick lamellae. To identify such thick lamellae the stepwise isothermal segregation technique (SIST) is the method of choice. Therefore, the polypropylene (PP), like the propylene homopolymer (H-PP) or the random propylene copolymer (R-PP), can be additionally or alternatively defined by the crystalline fractions melting in the temperature range of above 170 to 180 °C. Accordingly it is preferred that the polypropylene (PP), like the propylene homopolymer (H-PP) or the random propylene copolymer (R-PP), has a crystalline fraction melting above 170 to 180 °C of more than 23 wt.-%, more preferably in the range of more than 23 to equal or below 30 wt.-%, wherein said fraction is determined by the stepwise isothermal segregation technique (SIST).

Further it is preferred that the polypropylene (PP), like the propylene homopolymer (H-PP) or the random propylene copolymer (R-PP), has a crystalline fraction melting above 160 to 170 °C of more than 35 wt.-%, more preferably in the range of more than 35 to equal or below 42 wt.-%, wherein said fraction is determined by the stepwise isothermal segregation technique (SIST).

The values provided for the pentad concentration and the 2,1 erythro regio-defects as well as the amounts of crystalline fraction determined by the stepwise isothermal segregation technique (SIST) is especially applicable in case the polypropylene (PP) is a propylene homopolymer (H-PP).

Further the polypropylene (PP), especially the propylene homopolymer (H-PP), has preferably a xylene cold soluble content (XCS) in the range of 0.3 to 6.0 wt.-%, more preferably 0.5 to 5.5 wt.-%, still more preferably 1.0 to 4.0 wt.-%.

In one preferred embodiment of the present invention the polypropylene (PP), like the propylene homopolymer (H-PP) or the random propylene copolymer (R-PP), has an $MFR_2$ (230 °C) of equal or below 6.0 g/10min, more preferably of equal or below 5.0 g/10 min, still more preferably in the range of 0.5 to 6.0 g/10min, yet more preferably in the range of 1.0 to 5.0 g/10min.

Alternatively or additionally the polypropylene (PP), like the propylene homopolymer (H-PP) or the random propylene copolymer (R-PP), is defined by its crossover frequency $\omega_c$ (a parameter corresponding to the weight average molecular weight), said crossover frequency $\omega_c$ is the frequency at which the storage modulus G' and the loss modulus G" determined in a dynamic-mechanical rheology test are identical and defined as crossover modulus $G_c$. Thus it is appreciated that the polypropylene (PP), like the propylene homopolymer (H-PP) or the random propylene copolymer (R-PP), has a crossover frequency $\omega_c$ as determined by dynamic rheology according to ISO 6271-10 at 200°C of equal or above 10.0 rad/s, more preferably equal or above 12.0 rad/s, still more preferably equal or above 14.0 rad/s, yet more preferably in the range of equal or above 12.0 to 24.0 rad/s, still yet more preferably in the range of 13.0 to 22.0 rad/s, like in the range of 14.0 to 20.0 rad/s.

Further it is appreciated that the polypropylene (PP), like the propylene homopolymer (H-PP) or the random propylene copolymer (R-PP), is featured by a moderate molecular weight distribution. Accordingly it is required that the polypropylene (PP), like the propylene homopolymer (H-PP) or the random propylene copolymer (R-PP), has a polydispersity index (PI), defined as $10^5/G_c$ with $G_c$ being the crossover modulus from dynamic rheology according to ISO 6271-10 at 200°C, of below 5.3, more preferably of below 5.0, yet more preferably in the range of 3.0 to below 5.3, still more preferably in the range of 3.3 to 5.0, like 3.4 to 4.5.

Alternatively or additionally the polypropylene (PP), like the propylene homopolymer (H-PP) or the random propylene copolymer (R-PP), has a shear thinning index SHI (0/100) measured according to ISO 6271-10 at 200 °C of below 67, more preferably of below 65, yet more preferably in the range of 18 to below 67, still more preferably in the range of 20 to 65, like in the range of 22 to 55.

Preferably the polypropylene (PP) is a propylene homopolymer (H-PP).

The expression polypropylene homopolymer (H-PP) used in the instant invention relates to a polypropylene that consists substantially, i.e. of at least 99.5 wt.-%, more preferably of at least 99.8 wt.-%, of propylene units. In a preferred embodiment only propylene units in the polypropylene homopolymer (H-PP) are detectable.

If the polypropylene (PP) is a random polypropylene copolymer (R-PP), it comprises monomers copolymerizable with propylene, i.e. $\alpha$-olefins other than propylene, for example comonomers such as ethylene and/or $C_4$ to $C_{10}$ $\alpha$-olefins, in particular ethylene and/or $C_4$ to $C_8$ $\alpha$-olefins, e.g. 1-butene and/or 1-hexene. Preferably the random polypropylene copolymer (R-PP) comprises, especially consists of, monomers copolymerizable with propylene from the group consisting of ethylene, 1-butene and 1-hexene. More specifically, the random polypropylene copolymer (R-PP) comprises - apart from propylene - units derivable from ethylene and/or 1-butene. In a preferred embodiment of the present invention, the random polypropylene copolymer (R-PP) comprises units derivable from ethylene and propylene only.

The comonomer content in the random polypropylene copolymer (R-PP) is preferably relatively low, i.e. below

10 wt.-% or more preferably equal or below 5 wt.-%. In one preferred embodiment, the comonomer content is preferably between 0.1 wt.-% and 5 wt.-%, more preferably between 0.5 wt.-% and 4 wt.-%, even more preferably between 0.5 wt.-% and 3.5 wt.-% and most preferably between 1.0 wt.-% and 3.0 wt.-%, based on the total weight of the random polypropylene copolymer (R-PP).

The term random is understood according to IUPAC (Glossary of basic terms in polymer science; IUPAC recommendations 1996). Accordingly it is preferred that the random polypropylene copolymer (R-PP) has a randomness of at least 40 %, more preferably of at least 50 %, yet more preferably at least 55 %, even more preferably of at least 60 %, and still more preferably of at least 65 %.

In case of a random polypropylene copolymer (R-PP) it is preferred that at least in one of the steps (a), (c), and (e) as mentioned above, more preferably in all three steps, comonomers are polymerized as indicated in the instant invention.

As mentioned in the section "polymerization process" the instant polypropylene (PP), like the propylene homopolymer (H-PP) or the random propylene copolymer (R-PP), are produced in at least three reactors, preferably in three reactors. Accordingly the instant polypropylene (PP), like the propylene homopolymer (H-PP) or the random propylene copolymer (R-PP), comprises, consists of, three fractions. Preferably the polypropylene (PP), like the propylene homopolymer (H-PP) or the random propylene copolymer (R-PP), comprises

(a) 25 to 40 wt.-%, preferably 30 to 38 wt.-%, of a first polypropylene fraction (PP-A), preferably produced in the first reactor (R1),
(b) 40 to 60 wt.-%, preferably 45 to 55 wt.-%, of a second polypropylene fraction (PP-B), preferably produced in the second reactor (R2), and
(c) 10 to 20 wt.-%, preferably 12 to 18 wt.-%, of a third polypropylene fraction (PP-C), preferably produced in the third reactor (R3),

Wherein the amount is based on the total weight of the polypropylene, preferably the amount is based on the total weight of the first polypropylene fraction (PP-A), second polypropylene fraction (PP-B), and third polypropylene fraction (PP-C) together.

In case the polypropylene (PP) is a propylene homopolymer (H-PP) also its fractions are propylene homopolymer fractions. In such a case the individual fractions may differ in the melt flow rate $MFR_2$, but not necessarily. Accordingly in one embodiment the polypropylene (PP) is a propylene homopolymer (H-PP), wherein each fraction has a similar melt flow rate $MFR_2$, i.e. differ not more than +/- 0.5 g/10min, more preferably differ not more than +/- 0.3 g/10min, from each other.

In case the polypropylene (PP) is a random propylene copolymer (R-PP) at least one of the three fraction is a random propylene copolymer fraction. Accordingly a random propylene copolymer (R-PP) may also comprise a propylene homopolymer fraction. However it is preferred that the random propylene copolymer (R-PP) consists of random propylene copolymer fractions only.

In one specific embodiment the present invention is directed to a propylene homopolymer (H-PP) having

(a) a melt flow rate ($MFR_2$) measured according to ISO 1133 in the range of 1.0 to 5.0 g/10min, preferably in the range of 1.5 to 4.5 g/10min,
(b) a melting temperature Tm of more than 163 °C, preferably in the range of more than 163 to 168 °C, and/or a crystallization temperature Tc of more than 110 °C, preferably in the range of more than 110 to 128 °C, more preferably in the range of more than 115 to 128 °C, still more preferably in the range of more than 118 to 128 °C, and
(c) a crystalline fraction melting above 170 to 180 °C of more than 23 wt.-%, preferably in the range of more than 23 to equal or below 30 wt.-%, wherein said fraction is determined by the stepwise isothermal segregation technique (SIST).

(SIST), wherein the homopolymer (H-PP) comprises three propylene homopolymer fractions differing in the melt flow rate $MFR_2$, but differ not more than +/- 0.5 g/10 min from each other.

Preferably said propylene homopolymer (H-PP) of the previous paragraph has further

(a) 2,1 erythro regio-defects of equal or below 0.4 mol.-%, preferably equal or below 0.2 mol.-%, more preferably equal or below 0.1 mol.-%, like 0.0 mol.-%, determined by $^{13}$C-NMR spectroscopy,
and/or
(b) a pentad isotacticity (mmmm) of more than 93.5 mol.-%, preferably in the range of more than 93.5 to 97.0 mol-%, more preferably in the range of more than 94.0 to 97.0 mol-%,
and/or
(c) an ash content below 45 ppm, preferably below 40 ppm, more preferably in the range of 10 to below 45 ppm,

still more preferably in the range of 15 to below 40 ppm, yet more preferably in the range of 30 to 40 ppm, and/or

(d) a shear thinning index (0/100) measured according to ISO 6271-10 (200 °C) of below 67, preferably of below 65, more preferably in the range of 18 to below 67, still more preferably in the range of 20 to 65, yet more preferably in the range of 22 to 55,

and/or

(e) a polydispersity index (PI) of below 5.3, preferably of below 5.0, more preferably in the range of 3.0 to below 5.3, still more preferably in the range of 3.3 to 5.0, yet more preferably in the range 3.4 to 4.5.

Further preferred embodiments of the propylene homopolymer (H-PP) can be taken from the information provided for the polypropylene (PP) discussed above. Accordingly all preferred embodiments for the polypropylene (PP) are also preferred embodiments of the propylene homopolymer (H-PP) if not otherwise indicated.

Biaxially oriented film / Capacitor film

The polypropylene (PP), especially the propylene homopolymer (H-PP), as defined can subjected to a film forming process obtaining thereby a capacitor film. Preferably the polypropylene (PP), especially the propylene homopolymer (H-PP), is the only polymer within the capacitor film. Accordingly the capacitor film may contain additives but preferably no other polymer. Thus the remaining part up to 100.0 wt-% may be accomplished by additives known in the art, like antioxidants. However this remaining part shall be not more than 5.0 wt.-%, preferably not more than 2.0 wt.-%, like not more than 1.0 wt.%, within the capacitor film. Accordingly the capacitor film preferably comprises more than 95 wt.-%, more preferably more 98 wt.-%, like more than 99.0 wt.-%, of the polypropylene (PP), especially the propylene homopolymer (H-PP), as defined herein.

The thickness of the capacitor film can be up to 15.0 μm, however, typically the capacitor film has a thickness of not more than 12.0 μm, preferably not more than 10.0 μm, more preferably not more than 8.0 μm, yet more preferably in the range of 2.5 to 10 μm, like in the range of 3.0 to 8,0 μm.

Further it is preferred that the capacitor film is a biaxially oriented film, i.e. the polypropylene (PP), especially the propylene homopolymer (H-PP), as defined above or any mixtures (blends) comprising the polypropylene (PP), especially comprising the propylene homopolymer (H-PP), has/have been subjected to a drawing process obtaining thereby a biaxially oriented polymer. As indicated above capacitor film preferably contains the polypropylene (PP), especially the propylene homopolymer (H-PP), as only polymer and thus it is preferably a biaxially oriented polypropylene (BOPP) made from said polypropylene (PP), especially made from said propylene homopolymer (H-PP).

Preferably the capacitor film, i.e. the biaxially oriented polypropylene (BOPP), has a draw ratio in machine direction of at least 3.0 and a draw ratio in transverse direction of at least 3.0. Such ratios are appreciated as commercial biaxially oriented polypropylene films must be stretchable at least to the above defined extent without breaking. The length of the sample increases during stretching in longitudinal direction and the draw ratio in longitudinal direction calculates from the ratio of current length over original sample length. Subsequently, the sample is stretched in transverse direction where the width of the sample is increasing. Hence, the draw ratio calculates from the current width of the sample over the original width of the sample. Preferably the draw ratio in machine direction of the capacitor film, i.e. of the biaxially oriented polypropylene (BOPP), ranges from 3.5 to 8.0, more preferably from 4.5 to 6.5. The draw ratio in transverse direction of the capacitor film, i.e. of the biaxially polypropylene (BOPP), ranges preferably from 4.0 to 15.0, more preferably from 6.0 to 10,0. Temperature range during stretching is in general 100 °C to 180 °C.

As the capacitor film, i.e. the biaxially oriented polypropylene (BOPP), preferably is produced from the polypropylene (PP), especially from the propylene homopolymer (H-PP), as defined above, the properties given for the polypropylene (PP), especially for the propylene homopolymer (H-PP), are equally applicable for the capacitor film if not specified differently.

Preferably the polypropylene (PP), especially the propylene homopolymer (H-PP), is biaxially oriented.

After the preparation of the polypropylene (PP), the polypropylene (PP) is subjected to a film forming process. Any film forming processes which are suitable for the manufacture of a capacitor film can be used.

In a preferred embodiment the polypropylene (PP) is not subjected to a washing step prior to the film forming process.

The capacitor film, i.e. the biaxially oriented polypropylene (BOPP), can be prepared by conventional drawing processes known in the art. Accordingly the process for the manufacture of a capacitor film, i.e. the biaxially oriented polypropylene (BOPP), according to this invention comprises the use of the polypropylene (PP) as defined herein and its forming into a film preferably by the tenter method known in the art.

The tenter method is in particular a method in which the polypropylene (PP), especially the propylene homopolymer (H-PP), as defined herein is melt extruded from a slit die such as a T-die and cooled on a cooling drum obtaining an undrawn sheet. Said sheet is pre-heated for example with a heated metal roll and then drawn in the length direction

between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (machine direction: -20 to -10°C; transverse direction: -5 to +10°C). The uniformity of the film thickness on transverse drawing can be evaluated with the method in which a fixed region on the film is masked after drawing in the length direction and measuring the actual drawing factor by measuring the spacing of the said masking after transverse drawing.

Subsequently, the capacitor film, i.e. the biaxially oriented film (BOPP), can be treated by corona discharge in air, nitrogen, carbon dioxide gas or any of the mixtures on the surface to be metalized, to improve the adhesive strength to the metal to be deposited, and wound by a winder.

In the following the present invention is further illustrated by means of examples.

## EXAMPLES

### A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the stereo-regularity (tacticity), regio-regularity and comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra

For ethylene-propylene copolymers approximately 200 mg of material was dissolved in 3 ml of *1*,*2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme(Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra.

Quantitative $^{13}C\{^1H\}$ NMR spectra were processed, integrated and relevant quantitative properties determined from the integrals using proprietary computer programs.

For ethylene-propylene copolymers all chemical shifts were indirectly referenced to the central methylene group of the ethylene block (EEE) at 30.00 ppm using the chemical shift of the solvent. This approach allowed comparable referencing even when this structural unit was not present.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (\ mmmm\ /\ \text{sum of all pentads}\ )$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ )\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (\ P_{21e}\ /\ P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The mole fraction of ethylene in the polymer was quantified using the method of Wang et. al. (Wang, W-J., Zhu, S., Macromolecules 33 (2000), 1157) through integration of multiple signals across the whole spectral region of a $^{13}C\{^{1}H\}$ spectra acquired using defined conditions. This method was chosen for its accuracy, robust nature and ability to account for the presence of regio-defects when needed. Integral regions were slightly adjusted to increase applicability to a wider range of comonomer contents.

The mole percent comonomer incorporation in the polymer was calculated from the mole fraction according to:

$$E\ [mol\%] = 100 * fE$$

The weight percent comonomer incorporation in the polymer was calculated from the mole fraction according to:

$$E\ [wt\%] = 100 * (\ fE * 28.05\ )\ /\ (\ (fE * 28.05) + ((1-fE) * 42.08)\ )$$

The comonomer sequence distribution at the triad level was determined using the method of Kakugo et al. (Kakugo, M., Naito, Y., Mizunuma, K., Miyatake, T. Macromolecules 15 (1982) 1150) through integration of multiple signals across the whole spectral region of a $^{13}C\{1H\}$ spectra acquired using defined conditions. This method was chosen for its robust nature. Integral regions were slightly adjusted to increase applicability to a wider range of comonomer contents.

The mole percent of a given comonomer triad sequence in the polymer was calculated from the mole fraction determined by the method of Kakugo et at. (Kakugo, M., Naito, Y., Mizunuma, K., Miyatake, T. Macromolecules 15 (1982) 1150) according to:

$$XXX\ [mol\%] = 100 * fXXX$$

The mole fraction comonomer incorporation in the polymer, as determined from the comonomer sequence distribution at the triad level, were calculated from the triad distribution using known necessary relationships (Randall, J. Macromol. Sci., Rev. Macromol. Chem. Phys. 1989, C29, 201):

$$fXEX = fEEE + fPEE + fPEP$$

$$fXPX = fPPP + fEPP + fEPE$$

where PEE and EPP represents the sum of the reversible sequences PEE/EEP and EPP/PPE respectively.

The randomness of the comonomer distribution was quantified as the relative amount of isolated ethylene sequences as compared to all incorporated ethylene. The randomness was calculated from the triad sequence distribution using the relationship:

$$R(E)\ [\%] = 100 * (\ fPEP / fXEX\ )$$

**Rheology:** Dynamic rheological measurements were carried out with Rheometrics RDA-II QC on compression molded samples under nitrogen atmosphere at 200°C using 25 mm - diameter plate and plate geometry. The oscillatory shear experiments were done within the linear viscoelastic range of strain at frequencies from 0.01 to 500 rad/s. (ISO 6721-10)

The values of storage modulus (G'), loss modulus (G"), complex modulus (G*) and complex viscosity ($\eta$*) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2] \text{ and}$$

$$f''(\omega) = \eta''(\omega) / [\eta'(\omega)^2 + \eta''(\omega)^2]$$

From the following equations

$$\eta' = G'' / \omega \qquad \text{and} \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

**The polydispersity index, PI,**

PI = $10^5$/Gc, is calculated from the cross-over point of G'(ω) and G''(ω), for which G'(ωc) = G''(ωc) = Gc holds.

**Shear thinning indexes (SHI),** which are correlating with MWD and are independent of MW, were calculated according to Heino [1,2] (below). The SHI (0/100) is defined as the ratio between the zero shear viscosity and the viscosity at the shear stress of a shear stress of 100 kPa (η*100). The SHI (0/50) is defined as the ratio between the zero shear viscosity and the viscosity at the shear stress of 50 kPa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362
2) The influence of molecular structure on some rheological properties of polyethylene. Heino, Eeva-Leena. Borealis Polymers Oy, Porvoo, Finland. Annual Transactions of the Nordic Rheology Society, 1995

**Crossover frequency ωc**

The crossover frequency ωc is determined from the cross-over point of G'(ω) and G"(ω), for which G'(ωc) = G"(ωc) = Gc holds.

**Melt Flow Rate ($MFR_2$)**

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.
**The ash content** is measured according to ISO 3451-1 (1997).

**ICP (inductively coupled plasma) analysis**

Inductively coupled plasma emission spectrometry (ICP) is an analytical technique used for the detection of trace metals. It is a type of emission spectroscopy that uses the inductively coupled plasma (argon) to produce excited atoms and ions that emit electromagnetic radiation at wavelengths characteristic of a particular element. The intensity of this emission is indicative of the concentration of the element within the sample.
Apparatus used: Optima 2000DV from Perkin-Elmer
Titanium, aluminium and magnesium in pellets are determined with ICP. Acid standards are used as reference.

<u>Sample preparation</u>

Samples (sample weight [g]) are first ashed following DIN EN ISO 3451-1 and the ash is dissolved in $H_2SO_4$ 1N (sample conc [mg/l])

<u>Standards:</u>

Standard Titanium solution (Merck): 1000 ppm Ti = stock solution A
Standard Aluminium solution (Merck): 1000 ppm Al = stock solution B
Standard Magnesium solution (Merck): 1000 ppm Mg = stock solution C
Standard 10 ppm Ti, Al, Mg
1 ml of the respective stock solution is diluted in a volumetric flask up to 100 ml with distilled water
Acid standard 10 ppm Ti, 10 ppm Al and 10 ppm Mg
1 ml stock solutions A, B and C are put in a 100 ml volumetric flask. 2 g $KHSO_4$ and 25 ml $H_2SO_4$ 1N are added and diluted up to 100 ml with distilled water = standard high concentration
Acid standard 1 ppm Ti, 1 ppm Al and 1 ppm Mg
10 ml of each standard 10 ppm Ti, AL, Mg are put in a 100 ml volumetric flask. 2 g $KHSO_4$ and 25 ml $H_2SO_4$ 1N are added and dilute up to 100 ml with distilled water = standard low concentration
Blank sample for determination of Al, Ti and Mg
25 ml $H_2SO_4$ and 2 g $KHSO_4$ are put in a 100 ml volumetric flask and diluted up to 100 ml with distilled water =

standard blank Al, Ti, Mg

The obtained results of the standard low concentration and standard high concentration are inspected in the calibration summary. The "RSD value" (relative standard deviation value) of the standard should always be ≤10%. The obtained results must be close to the real value of the standards used. The calibration summary is checked. The correlation coefficient must be ≥0.997.

The samples are analysed 3 times each. The obtained results are checked and ensured that the RSD ≤10%.

The average value of 3 determinations is reported.

Calculate the concentration of the element (ppm) as:

$$\frac{\text{Sample conc (mg/l) x 100}}{\text{Sample weight used for calcinations (g)}}$$

**The xylene cold soluble (XCS, wt.-%)** content of xylene cold solubles (XCS) is determined at 25 °C according ISO 16152; first edition; 2005-07-01.

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy **(Hm and Hc)** were measured by the DSC method according to ISO 11357-3.

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

**B. Examples**

The catalyst used in the polymerization process for examples E1, E2, and CE1 to CE4 has been produced as follows: First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and

EP586390. As co-catalyst triethyl-aluminium (TEAL) and as donor dicyclo pentyl dimethoxy silane (D-donor) was used. The aluminium to donor ratio is indicated in table 1.

**Table 1:** Preparation of polypropylene (PP) examples

| | | CE1 | CE2 | CE3 | IE1 | CE4 | IE2 |
|---|---|---|---|---|---|---|---|
| Ti in cat | [wt.-%] | 1.80 | 1.80 | 1.80 | 1.80 | 1.80 | 1.80 |
| TEAL/Ti | [mol/mol] | 80 | 80 | 130 | 180 | 180 | 130 |
| TEAL/Donor | [mol/mol] | 10 | 20 | 25 | 20 | 10 | 15 |
| cat feed rate | [g/h] | 1.7 | 1.7 | 1 | 1 | 1 | 1 |
| **LOOP** | | | | | | | |
| split | [wt.-%] | 41.0 | 27.3 | 36.3 | 34.8 | 32.2 | 33.8 |
| $MFR_2$ | [g/10'] | 2.6 | 2.7 | 2.8 | 2.4 | 2.7 | 3.0 |
| XCS | [wt%] | 2.1 | 2.8 | 3 | 3.1 | 2.1 | 2.7 |
| H2/C3 | mol/kmol | 1.32 | 1.21 | 1.22 | 1.20 | 1.34 | 1.24 |
| **GPR1** | | | | | | | |
| Split | [wt.-%] | 48.0 | 55.2 | 52.2 | 49.9 | 42.8 | 55.8 |
| $MFR_2$ | [g/10'] | 2.3 | 3.7 | 2.6 | 2.3 | 2.8 | 3.0 |
| XCS | [wt%] | 2.2 | 2.2 | 2.5 | 2.5 | 1.9 | 2.4 |
| H2/C3 | mol/kmol | 30.8 | 31.2 | 19.9 | 21.2 | 26.4 | 28.7 |
| **GPR2** | | | | | | | |
| split | wt% | 11.0 | 18.3 | 11.9 | 15.8 | 25.6 | 10.8 |
| $MFR_2$ | [g/10'] | 2.5 | 2.9 | 2.6 | 2.3 | 2.9 | 3.1 |
| XCS | [wt%] | 2.1 | 2.5 | 3.4 | 2.4 | 2.1 | 2.0 |
| H2/C3 | mol/kmol | 24.8 | 25.6 | 23.7 | 25.0 | 29.7 | 22.8 |
| | | | | | | | |
| Productivity | [kg/g] | 33.2 | 33.1 | 65.9 | 78.9 | 80.9 | 66.6 |
| Teal/C3 | [g/t] | 32 | 32 | 31 | 34 | 42 | 31 |
| Donor /C3 | [g/t] | 6.5 | 3.2 | 2.5 | 3.4 | 8.5 | 4.1 |

**Table 2:** Properties of the polypropylene (PP) examples

| | | CE1 | CE2 | CE3 | IE1 | CE4 | IE2 | CE5 | CE6 |
|---|---|---|---|---|---|---|---|---|---|
| MFR | [g/10min] | 2.5 | 2.9 | 2.6 | 2.3 | 2.9 | 3.1 | 3.4 | 2.3 |
| XCS | [wt.-%] | 2.1 | 2.5 | 3.4 | 2.4 | 2.1 | 2.0 | 3.3 | 2.6 |
| Tm | [°C] | 166 | 165 | 165 | 166 | 166 | 165 | 161 | 161 |
| Tc | [°C] | 122 | 122 | 122 | 122 | 122 | 122 | 111 | 114 |
| Ash | [ppm] | 61 | 46 | 44 | 38 | 40 | 36 | 60 | 12 |
| A1 | [ppm] | 14.7 | 15.7 | 10.6 | 10.7 | 9.8 | 8.1 | 14 | 1.5 |
| Mg | [ppm] | 6.3 | 6 | 4.7 | 4.1 | 3.6 | 3.7 | 3.9 | <0.5 |
| Ti | [ppm] | 0.6 | 0.6 | <0.5 | <0.5 | <0.5 | <0.5 | 0.8 | <0.5 |
| Microstructure by NMR | | | | | | | | | |
| [mmmm] | [mol-%] | 94.8 | 94.1 | 93.9 | 94.0 | 96.4 | 95.7 | n.m | 92.4 |

(continued)

| | | | | | | | | | |
|---|---|---|---|---|---|---|---|---|---|
| Microstructure by NMR | | | | | | | | | |
| 2,1 e | [mol-%] | 0.0 | 0.0 | 0.0 | 0.0 | 0.0 | 0.0 | n.m. | 0.0 |
| Microstructure by SIST | | | | | | | | | |
| 160-170°C | [wt.-%] | 36 | 38 | 42 | 39 | 38 | 39 | 43 | 47 |
| 170-180°C | [wt.-%] | 30 | 25 | 22 | 26 | 28 | 24 | 2.8 | 2.5 |
| Melt Rheology, Frequency sweep, 200°C | | | | | | | | | |
| WC | [rad/s] | 16.3 | 18.1 | 16.3 | 15.9 | 20.4 | 19.2 | 20 | 9.4 |
| PI | [$Pa^{-1}$] | 3.8 | 3.8 | 3.9 | 3.8 | 3.7 | 3.9 | 4 | 4.7 |
| eta0 | [Pa s] | 13690 | 12640 | 12830 | 13260 | 10470 | 11090 | 11990 | 25990 |
| SHI0/50 | [-] | 8.2 | 8.5 | 8.5 | 7.9 | 7.5 | 8.2 | 10.2 | 14.8 |
| SHI0/100 | [-] | 24.4 | 25.3 | 25.8 | 23.5 | 22.0 | 25.0 | 32.6 | 49.2 |
| CE5 is the commercial propylene homopolymer HC401BF of Borealis AG<br>CE6 is the commercial propylene homopolymer HB311BF of Borealis AG | | | | | | | | | |

## Claims

1. Process for the preparation of a polypropylene (PP) in a sequential polymerization process comprising at least three reactors connected in series, wherein the polymerization takes place in the presence of a Ziegler-Natta catalyst (ZN-C), said Ziegler-Natta catalyst (ZN-C) comprises

    (a) a pro-catalyst (PC) comprising

        (a1) a compound of a transition metal (TM),
        (a2) a compound of a metal (M) which metal is selected from one of the groups 1 to 3 of the periodic table (IUPAC),
        (a3) an internal electron donor (ID),

    (b) a co-catalyst (Co), and
    (c) an external donor (ED),
    wherein further
    (d) the mol-ratio of co-catalyst (Co) to external donor (ED) [Co/ED] is in the range of 12 to below 25, and
    (e) the mol-ratio of co-catalyst (Co) to transition metal (TM) [Co/TM] is in the range of above 100 to 195.

2. Process according to claim 1, wherein the temperature is at least in one of the three reactors, preferably in all three reactors, in the range of 70 °C to 100 °C.

3. Process according to claim 1 or 2, wherein the weight-ratio of co-catalyst (Co) to propylene (C3) [Co/C3] is in the range of 25 g/t to 40 g/t, more preferably in the range of 28 g/t to 38 g/t, yet more preferably in the range of 29 g/t to 35 g/t.

4. Process according to one of the preceding claims, wherein

    (a) the metal of the compound of a transition metal (TM) is selected from one of the groups 4 to 6, in particular of group 4, like Ti, of the periodic table (IUPAC),
    and/or
    (b) the compound of a metal (M) is $MgCl_2$,
    and/or
    (c) the internal donor (ID) comprises an dialkylphthalate of formula (II)

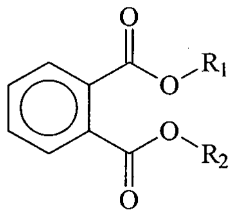

(II)

,

wherein $R_1$ and $R_2$ are independently a $C_1$ to $C_4$ alkyl.

**5.** Process according to one of the preceding claims, wherein
the co-catalyst (Co) is an aluminum compound,
and/or
the external donor (ED) is an hydrocarbyloxy silane, preferably a compound represented by formula (III)

$Si(OCH_3)_2R_2^5$ (III)

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

**6.** Process according to one of the preceding claims, wherein the first reactor (R1) is a loop reactor (LR) and the subsequent reactors are gas phase reactors (GRs).

**7.** Process according to one of the preceding claims, wherein the process does not comprise a washing step for the polypropylene (PP).

**8.** Process according to one of the preceding claims, wherein

(a) in the first polymerization reactor (R1) propylene and optionally at least one other $\alpha$-olefin is/are polymerized obtaining a first fraction (1$^{st}$ F) of the polypropylene (PP),
(b) transferring said first fraction (1$^{st}$ F) to second polymerization reactor (R2),
(c) in the second polymerization reactor (R2) propylene and optionally at least one other $\alpha$-olefin is/are polymerized in the presence of the first fraction (1$^{st}$ F) obtaining a second fraction (2$^{nd}$ F) of the polypropylene (PP), said first fraction (1$^{st}$ F) and said second fraction (2$^{nd}$ F) form a first mixture (1$^{st}$ M),
(d) transferring said first mixture (1$^{st}$ M) to third polymerization reactor (R3), and
(e) in the third polymerization reactor (R3) propylene and optionally at least one other $\alpha$-olefin is/are polymerized in the presence of the first mixture (1$^{st}$ M) obtaining a third fraction (3$^{rd}$ F) of the polypropylene (PP), said first mixture (1$^{st}$ M) and said third fraction (3$^{rd}$ F) form the polypropylene (PP).

**9.** Process according to one of the preceding claims, wherein the polypropylene (PP) has a melt flow rate ($MFR_2$) measured according to ISO 1133 in the range of 1.0 to 5.0 g/10min.

**10.** Process according to one of the preceding claims, wherein the polypropylene (PP) has an ash content below 45 ppm, preferably below 40 ppm, measured according to IS03451-1 (1997).

**11.** Process according to one of the preceding claims, wherein the polypropylene (PP) has

(a) 2,1 erythro regio-defects of equal or below 0.4 mol.-% determined by $^{13}$C-NMR spectroscopy,
and/or
(b) a pentad isotacticity (mmmm) of more than 93.5 mol.-%, preferably in the range of more than 93.5 to 97.0 mol.-%.

**12.** Process according to one of the preceding claims, wherein the polypropylene (PP) has

(a) a shear thinning index (0/100) measured according to ISO 6271-10 (200 °C) of below 67,
and/or

(b) a polydispersity index (PI) of below 5.3.

**13.** Process according to one of the preceding claims, wherein the polypropylene (PP) has

(a) a melting temperature Tm of more than 163°C, measured by DSC, J and/or
(b) a crystallization temperature Tc of more than 110°C, measured by DSC,
and/or
(c) a crystalline fraction melting above 170 to 180 °C of more than 23 wt.-%, wherein said fraction is determined by the stepwise isothermal segregation technique (SIST).

**14.** Process according to one of the preceding claims, wherein the polypropylene (PP) is a propylene homopolymer (H-PP).

**15.** Propylene homopolymer (H-PP) having

(a) a melt flow rate ($MFR_2$) measured according to ISO 1133 in the range of 1.0 to 5.0 g/10min,
(b) a melting temperature Tm of more than 163 °C and/or a crystallization temperature Tc of more than 110 °C, and
(c) a crystalline fraction melting above 170 to 180 °C of more than 23 wt.-%, wherein said fraction is determined by the stepwise isothermal segregation technique (SIST),

wherein the propylene homopolymer (H-PP) comprises three propylene homopolymer fractions differing in the melt flow rate $MFR_2$, but differ not more than +/- 0.5 g/10min from each other.

**16.** Propylene homopolymer (H-PP) according to claim 15 has further

(a) 2,1 erythro regio-defects of equal or below 0.4 mol.-% determined by $^{13}C$-NMR spectroscopy,
and/or
(b) a pentad isotacticity (mmmm) of more than 93.5 mol.-%, preferably in the range of more than 93.5 to 97.0 mol-%,
and/or
(c) an ash content below 45 ppm, preferably below 40 ppm.

**17.** Propylene homopolymer (H-PP) according to claim 15 or 16 has further

(a) a shear thinning index (0/100) measured according to ISO 6271-10 (200 °C) of below 67,
and/or
(b) a polydispersity index (PI) of below 5.3.

## Patentansprüche

**1.** Verfahren zur Herstellung von einem Polypropylen (PP) in einem sequenziellen Polymerisations-Verfahren, umfassend mindestens drei in Reihe verbundene Reaktoren, wobei die Polymerisationen in Gegenwart von einem Ziegler-Natta-Katalysator (ZN-C) stattfinden, wobei der Ziegler-Natta-Katalysator (ZN-C) umfasst

(a) einen Pro-Katalysator (PC), umfassend

(a1) eine Verbindung von einem ÜbergangsMetall (TM),
(a2) eine Verbindung von einem Metall (M), wobei das Metall ausgewählt ist aus einer der Gruppen 1 bis 3 des Periodensystems (IUPAC),
(a3) einen inneren Elektronen-Donor (ID),

(b) einen Co-Katalysator (Co), und
(c) einen äußeren Donor (ED),
wobei weiterhin
(d) das Mol-Verhältnis von Co-Katalysator (Co) zu äußerem Donor (ED) [Co/ED] in dem Bereich von 12 bis unter 25 liegt, und
(e) das Mol-Verhältnis von Co-Katalysator (Co) zu Übergangs-Metall (TM) [Co/TM] in dem Bereich von über

100 bis 195 liegt.

2. Verfahren nach Anspruch 1, wobei die Temperatur mindestens in einem der drei Reaktoren, vorzugsweise in allen drei Reaktoren, in dem Bereich von 70°C bis 100°C liegt.

3. Verfahren nach Anspruch 1 oder 2, wobei das GewichtsVerhältnis von Co-Katalysator (Co) zu Propylen (C3) [Co/C3] in dem Bereich von 25 g/t bis 40 g/t, bevorzugter in dem Bereich von 28 g/t bis 38 g/t, stark bevorzugt in dem Bereich von 29 g/t bis 35 g/t liegt.

4. Verfahren nach einem der vorangehenden Ansprüche, wobei

(a) das Metall der Verbindung von einem ÜbergangsMetall (TM) ausgewählt ist aus einer der Gruppen 4 bis 6, insbesondere aus Gruppe 4, wie Ti, des Periodensystems (IUPAC),
und/oder
(b) die Verbindung von einem Metall (M) $MgCl_2$ ist, und/oder
(c) der innere Donor (ID) ein Dialkylphthalat der Formel (II) umfasst

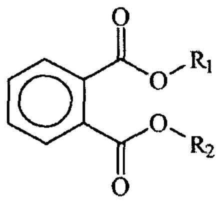

(II)

worin $R_1$ und $R_2$ unabhängig ein $C_1$ bis $C_4$ Alkyl darstellen.

5. Verfahren nach einem der vorangehenden Ansprüche, wobei der Co-Katalysator (Co) eine Aluminium-Verbindung ist, und/oder
der äußere Donor (ED) ein Kohlenwasserstoffoxysilan, vorzugsweise eine Verbindung, wiedergegeben durch Formel (III) ist

$Si(OCH_3)_2R^5{}_2$ (III)

worin $R^5$ eine verzweigte Alkyl-Gruppe mit 3 bis 12 Kohlenstoff-Atomen, vorzugsweise eine verzweigte Alkyl-Gruppe mit 3 bis 6 Kohlenstoff-Atomen, oder ein Cyclo-alkyl mit 4 bis 12 Kohlenstoff-Atomen, vorzugsweise ein Cyclo-alkyl mit 5 bis 8 Kohlenstoff-Atomen, wiedergibt.

6. Verfahren nach einem der vorangehenden Ansprüche, wobei der erste Reaktor (R1) ein Schleifen-Reaktor (LR) ist und die anschließenden Reaktoren Gas-Phasen-Reaktoren (GRen) sind.

7. Verfahren nach einem der vorangehenden Ansprüche, wobei das Verfahren keinen Wasch-Schritt für das Polypropylen (PP) umfasst.

8. Verfahren nach einem der vorangehenden Ansprüche, wobei

(a) in dem ersten Polymerisations-Reaktor (R1) Propylen und gegebenenfalls mindestens ein anderes α-Olefin polymerisiert wird/werden unter Gewinnen einer ersten Fraktion (1. F) von dem Polypropylen (PP),
(b) Überführen der ersten Fraktion (1. F) zu dem zweiten Polymerisations-Reaktor (R2),
(c) in dem zweiten Polymerisations-Reaktor (R2) Propylen und gegebenenfalls mindestens ein anderes α-Olefin polymerisiert wird/werden in Gegenwart von der ersten Fraktion (1. F) unter Gewinnen einer zweiten Fraktion (2. F) von dem Polypropylen (PP), wobei die erste Fraktion (1. F) und die zweite Fraktion (2. F) ein erstes Gemisch (1. M) bilden,
(d) Überführen des ersten Gemisches (1. M) zu dem dritten Polymerisations-Reaktor (R3), und
(e) in dem dritten Polymerisations-Reaktor (R3) Propylen und gegebenenfalls mindestens ein anderes α-Olefin polymerisiert wird/werden in Gegenwart von dem ersten Gemisch (1. M) unter Gewinnen einer dritten Fraktion (3. F) von dem Polypropylen (PP), wobei das erste Gemisch (1. M) und die dritte Fraktion (3. F) das Polypropylen (PP) bilden.

**9.** Verfahren nach einem der vorangehenden Ansprüche, wobei das Polypropylen (PP) eine Schmelze-Fließ-Rate ($MFR_2$), gemessen gemäß ISO 1133, in dem Bereich von 1,0 bis 5,0 g/10 min aufweist.

**10.** Verfahren nach einem der vorangehenden Ansprüche, wobei das Polypropylen (PP) einen Asche-Gehalt unter 45 ppm, vorzugsweise unter 40 ppm, gemessen gemäß ISO3451-1 (1997), aufweist.

**11.** Verfahren nach einem der vorangehenden Ansprüche, wobei das Polypropylen (PP) aufweist

(a) 2,1 Erythro-Regio-Defekte von gleich oder unter 0,4 Mol-%, bestimmt durch $^{13}C$-NMR-Spektroskopie, und/oder
(b) eine Pentaden-Isotaktizität (mmmm) von mehr als 93,5 Mol-%, vorzugsweise in dem Bereich von mehr als 93,5 bis 97,0 Mol-%.

**12.** Verfahren nach einem der vorangehenden Ansprüche, wobei das Polypropylen (PP) aufweist

(a) einen Struktur-Viskositäts-Index (0/100), gemessen gemäß ISO 6271-10 (200°C), von unter 67, und/oder
(b) einen Polydispersitäts-Index (PI) von unter 5,3.

**13.** Verfahren nach einem der vorangehenden Ansprüche, wobei das Polypropylen (PP) aufweist

(a) eine Schmelz-Temperatur Tm von mehr als 163°C, gemessen durch DSC,
und/oder
(b) eine Kristallisations-Temperatur Tc von mehr als 110°C, gemessen durch DSC;
und/oder
(c) eine kristalline Fraktion, die über 170 bis 180°C schmilzt, von mehr als 23 Gew.-%, wobei die Fraktion durch die schrittweise isotherme Segregations-Technik (SIST) bestimmt wird.

**14.** Verfahren nach einem der vorangehenden Ansprüche, wobei das Polypropylen (PP) ein Propylen-Homopolymer (H-PP) ist.

**15.** Propylen-Homopolymer (H-PP) mit

(a) einer Schmelze-Fließ-Rate ($MFR_2$), gemessen gemäß ISO 1133, in dem Bereich von 1,0 bis 5,0 g/10 min,
(b) einer Schmelz-Temperatur Tm von mehr als 163°C und/oder einer Kristallisations-Temperatur Tc von mehr als 110°C, und
(c) einer kristallinen Fraktion, die über 170 bis 180°C schmilzt, von mehr als 23 Gew.-%, wobei die Fraktion durch die schrittweise isotherme Segregations-Technik (SIST) bestimmt wird,

wobei das Propylen-Homopolymer (H-PP) drei Propylen-Homopolymer-Fraktionen umfasst, die sich in der Schmelze-Fließ-Rate $MFR_2$ unterscheiden, aber sich nicht mehr als +/- 0,5 g/10 min voneinander unterscheiden.

**16.** Propylen-Homopolymer (H-PP) nach Anspruch 15, das weiterhin aufweist

(a) 2,1 Erythro-Regio-Defekte von gleich oder unter 0,4 Mol-%, bestimmt durch $^{13}C$-NMR-Spektroskopie, und/oder
(b) eine Pentaden-Isotaktizität (mmmm) von mehr als 93,5 Mol-%, vorzugsweise in dem Bereich von mehr als 93,5 bis 97,0 Mol-%,
und/oder
(c) einen Asche-Gehalt unter 45 ppm, vorzugsweise unter 40 ppm.

**17.** Propylen-Homopolymer (H-PP) nach Anspruch 15 oder 16, das weiterhin aufweist

(a) einen Struktur-Viskositäts-Index (0/100), gemessen gemäß ISO 6271-10 (200°C), von unter 67,
und/oder
(b) einen Polydispersitäts-Index (PI) von unter 5,3.

## Revendications

1. **1.** Procédé pour la préparation d'un polypropylène (PP) dans un procédé de polymérisation séquentielle comprenant au moins trois réacteurs connectés en série, dans lequel la polymérisation se déroule en présence d'un catalyseur de Ziegler-Natta (ZN-C), ledit catalyseur de Ziegler-Natta (ZN-C) comprenant

(a) un procatalyseur (PC) comprenant

(a1) un composé d'un métal de transition (TM),
(a2) un composé d'un métal (M), lequel métal est choisi parmi l'un des Groupes 1 à 3 du Tableau Périodique (IUPAC),
(a3) un donneur d'électron interne (ID),

(b) un cocatalyseur (Co), et
(c) un donneur externe (ED),
dans lequel en outre
(d) le rapport en moles du cocatalyseur (Co) sur le donneur externe (ED) [Co/ED] est situé dans la plage allant de 12 à moins de 25, et
(e) le rapport en moles du cocatalyseur (Co) sur le métal de transition (TM) [Co/TM] est situé dans la plage allant de plus de 100 à 195.

**2.** Procédé selon la revendication 1, dans lequel la température est, au moins dans l'un des trois réacteurs, de préférence dans tous les trois réacteurs, située dans la plage allant de 70°C à 100°C.

**3.** Procédé selon la revendication 1 ou 2, dans lequel le rapport en poids du cocatalyseur (Co) sur le propylène (C3) [Co/C3] est situé dans la plage allant de 25 g/t à 40 g/t, plus préférablement dans la plage allant de 28 g/t à 38 g/t, encore plus préférablement dans la plage allant de 29 g/t à 35 g/t.

**4.** Procédé selon l'une des revendications précédentes, dans lequel

(a) le métal du composé d'un métal de transition (TM) est choisi parmi l'un des Groupes 4 à 6, en particulier dans le Groupe 4, tel que Ti, du Tableau périodique (IUPAC), et/ou
(b) le composé d'un métal (M) est $MgCl_2$,
et/ou
(c) le donneur interne (ID) comprend un phtalate de dialkyle de formule (II)

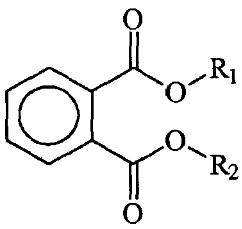

(II)

dans laquelle $R_1$ et $R_2$ sont indépendamment un alkyle en $C_1$ à $C_4$.

**5.** Procédé selon l'une des revendications précédentes, dans lequel
le cocatalyseur (Co) est un composé de l'aluminium,
et/ou
le donneur externe (ED) est un hydrocarbyloxysilane, de préférence un composé représenté par la formule (III)

$$Si(OCH_3)_2R^5_2 \qquad (III)$$

dans laquelle $R^5$ représente un groupe alkyle ramifié possédant 3 à 12 atomes de carbone, de préférence un groupe alkyle ramifié possédant 3 à 6 atomes de carbone, ou un cycloalkyle possédant 4 à 12 atomes de carbone, de préférence un cycloalkyle possédant 5 à 8 atomes de carbone.

**6.** Procédé selon l'une des revendications précédentes, dans lequel le premier réacteur (R1) est un réacteur à boucle (LR) et les réacteurs subséquents sont des réacteurs en phase gazeuse (GR).

**7.** Procédé selon l'une des revendications précédentes, lequel procédé ne comprend pas une étape de lavage pour le polypropylène (PP).

**8.** Procédé selon l'une des revendications précédentes, dans lequel

(a) dans le premier réacteur de polymérisation (R1), du propylène et éventuellement au moins une autre $\alpha$-oléfine est/sont polymérisé(s), ce qui donne une première fraction (1ère F) du polypropylène (PP),
(b) ladite première réaction (1ère F) est transférée dans le deuxième réacteur de polymérisation (R2),
(c) dans le deuxième réacteur de polymérisation (R2), du propylène et éventuellement au moins une autre $\alpha$-oléfine est/sont polymérisé(s) en présence de la première fraction (1ère F), ce qui donne une deuxième fraction (2ème F) du polypropylène (PP), ladite première fraction (1ère F) et ladite deuxième fraction (2ème F) formant un premier mélange (1er M),
(d) ledit premier mélange (1er M) est transféré dans le troisième réacteur de polymérisation (R3), et
(e) dans le troisième réacteur de polymérisation (R3), du propylène et éventuellement au moins une autre $\alpha$-oléfine est/sont polymérisé(s) en présence du premier mélange (1er M), ce qui donne une troisième fraction (3ème F) du polypropylène (PP), ledit premier mélange (1er M) et ladite troisième fraction (3ème F) formant le polypropylène (PP).

**9.** Procédé selon l'une des revendications précédentes, dans lequel le polypropylène (PP) présente un indice de fluage ($MFR_2$), mesuré conformément à la norme ISO 1133, situé dans la plage allant de 1,0 à 5,0 g/10 min.

**10.** Procédé selon l'une des revendications précédentes, dans lequel le polypropylène (PP) possède une teneur en cendres, mesurée conformément à la norme ISO 3451-1 (1997), inférieure à 45 ppm, de préférence inférieure à 40 ppm.

**11.** Procédé selon l'une des revendications précédentes, dans lequel le polypropylène (PP) possède (a) des régio-défauts 2,1-érythro, déterminés par spectroscopie RMN-$^{13}C$, à raison de 0,4 % en moles ou moins, et/ou

(b) une isotacticité de pentade (mmmm) supérieure à 93,5 % en moles, de préférence située dans la plage allant de plus de 93,5 à 97,0 % en moles.

**12.** Procédé selon l'une des revendications précédentes, dans lequel le polypropylène (PP) possède (a) un indice de fluidification par cisaillement (0/100), mesuré conformément à la norme ISO 6271-10 (200°C) inférieur à 67, et/ou

(b) un indice de polydispersité (PI) inférieur à 5,3.

**13.** Procédé selon l'une des revendications précédentes, dans lequel le polypropylène (PP) possède

(a) un point de fusion Tm, mesuré par DSC, supérieur à 163°C,
et/ou
(b) un point de cristallisation Tc, mesuré par DSC, supérieur à 110°C,
et/ou
(c) une fraction cristalline fondant au-delà de 170 à 180°C supérieure à 23 % en poids, laquelle fraction est déterminée par la technique de ségrégation isotherme étagée (SIST).

**14.** Procédé selon l'une des revendications précédentes, dans lequel le polypropylène (PP) est un homopolymère de propylène (H-PP).

**15.** Homopolymère de propylène (H-PP) possédant

(a) un indice de fluage ($MFR_2$), mesuré conformément à la norme ISO 1133, situé dans la plage allant de 1,0 à 5,0 g/10 min,
(b) un point de fusion Tm supérieur à 163°C et/ou un point de cristallisation Tc supérieur à 110°C, et

(c) une fraction cristalline fondant au-delà de 170 à 180°C supérieure à 23 % en poids, laquelle fraction est déterminée par la technique de ségrégation isotherme étagée (SIST),

lequel homopolymère de propylène (H-PP) comprend trois fractions d'homopolymère de propylène différant par leur indice de fluage $MFR_2$, mais ne différant pas de ± 0,5 g/10 min les unes par rapport aux autres.

**16.** Homopolymère de propylène (H-PP) selon la revendication 15, possédant en outre

(a) des régio-défauts 2,1-érythro, déterminés par spectroscopie RMN-$^{13}C$, à raison de 0,4 % en moles ou moins,
et/ou
(b) une isotacticité de pentade (mmmm) supérieure à 93,5 % en moles, de préférence située dans la plage allant de plus de 93,5 à 97,0 % en moles,
et/ou
(c) une teneur en cendres inférieure à 45 ppm, de préférence inférieure à 40 ppm.

**17.** Homopolymère de propylène (H-PP) selon la revendication 15 ou 16, possédant en outre

(a) un indice de fluidification par cisaillement (0/100), mesuré conformément à la norme ISO 6271-10 (200°C, inférieur à 67,
et/ou
(b) un indice de polydispersité (PI) inférieur à 5,3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 0491566 A2
- EP 491566 A
- EP 591224 A
- EP 586390 A


### Non-patent literature cited in the description


- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA ; A., BAUGH ; D. WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J ; TALARICO, G.** *Macromol. Rapid Commun.,* 2007, vol. 28, 11289
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R ; TAHA, A. ; BAUGH, D. ; WINNIFORD, B.** *J. Mag. Reson.,* 2007, vol. 187, 225
- **BUSICO, V. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L ; FAIT, A. ; PIEMONTESI, F.** *Chem. Rev.,* 2000, vol. 100, 1253
- **WANG, W-J ; ZHU, S.** *Macromolecules,* 2000, vol. 33, 1157
- **CHENG, H. N.** *Macromolecules,* 1984, vol. 17, 1950
- **CHENG, H. N.** *Macromolecules,* 1984, vol. 17, 1950
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- **KAKUGO, M. ; MIZUNUMA, K. ; MIYATAKE, T.** *Macromolecules,* 1982, vol. 15, 1150
- **RANDALL.** *J. Macromol. Sci., Rev. Macromol. Chem. Phys.,* 1989, vol. C29, 201
- **HEINO, E.L. ; LEHTINEN, A ; TANNER, J ; SEPPÄLÄ, J.** *Theor. Appl. Rheol., Proc. Int. Congr. Rheol., 11,* 1992, vol. 1, 360-362
- **HEINO ; EEVA-LEENA.** *Annual Transactions of the Nordic Rheology Society,* 1995